# EUROPÄISCHE PATENTSCHRIFT

(11) **EP 1 245 836 B1**
(45) Veröffentlichungstag und Bekanntmachung des Hinweises auf die Patenterteilung: **28.01.2004**
(21) Anmeldenummer: 02006982.9
(22) Anmeldetag: 27.03.2002
(51) Int. Cl.: F16B 7/04

(54) **Klemmverbinder zum lösbaren Verbinden von Profilstücken**
Clamping device for detachably connecting profiles
Dispositif de serrage pour l'assemblage demontable de profilés

(30) Priorität: 28.03.2001 DE 10115238
(43) Veröffentlichungstag der Anmeldung: 02.10.2002
(73) Patentinhaber: Offenbroich, Adrian, 40217 Düsseldorf (DE)
(72) Erfinder: Offenbroich, Adrian, 40217 Düsseldorf (DE)
(74) Vertreter: Stenger, Watzke & Ring Patentanwälte

(56) Entgegenhaltungen:
- DE-A- 19 817 427
- US-A- 3 672 710
- US-A- 4 893 959
- US-A- 5 816 734

## Beschreibung

Die Erfindung betrifft einen Klemmverbinder zum lösbaren Verbinden von zwei Profilstücken, von denen das eine eine hinterschnittene Längsnut und das andere ein kastenförmiges Hohlprofil aufweist, mit einem in das Hohlprofil einsetzbaren Basiskörper und einem am Basiskörper angeordneten, in der Längsnut verklemmbaren Ankerelement, wobei der Basiskörper aus einem Gehäuse und einem im wesentlichen länglichen sowohl in Hohlprofillängsrichtung als auch in Hohlprofilquerrichtung relativ zum Gehäuse bewegbaren Profilelement gebildet ist und wobei das Ankerelement an der der Längsnut zugewandten Stirnfläche des Profilelements angeordnet ist, wobei das Gehäuse ein durch eine Öffnung in einer Wandung des Hohlprofils zugängliches Betätigungselement zur Erzeugung einer Relativbewegung zwischen dem Profilelement und dem Gehäuse in wenigstens einer ersten Richtung aufweist, wobei das Gehäuse zur Erzeugung einer Relativbewegung zwischen Gehäuse und Profilelement in wenigstens einer zweiten Richtung für den Fall, daß eine Relativbewegung in der ersten Richtung erfolgt, sowie zur Begrenzung der Bewegungswege von Gehäuse und Profilelement relativ zueinander in Hohlprofillängsrichtung und Hohlprofilquerrichtung Führungsbahnen bildende Ausnehmungen aufweist, welche wenigstens ein zwischen Profilelement und Gehäuse angeordnetes Führungselement aufnehmen.

Die Verwendung von Profilstücken der vorbeschriebenen Art ist in der Praxis weit verbreitet. Aus derartigen Profilstücken sind beispielsweise Regalsysteme, Messebauten oder dergleichen aufgebaut. Üblicherweise handelt es sich dabei um Profilstränge, zumeist aus Aluminium, wobei an vertikal ausgerichteten Ständern horizontale Träger angeordnet werden, um so ein Gerüst, beispielsweise in Form eines Regals, aufzubauen. Hierbei ist es stets angestrebt, daß an den Anschlußstellen möglichst einfach aufgebaute Verbindungen realisiert werden, die vor allem schnelle Montagen und Demontagen ermöglichen. Zu diesem Zweck werden daher die Profilstränge dergestalt ausgebildet, daß sie üblicherweise einen zentralen, kastenförmigen Hohlprofilbereich sowie eine an einer Wandung parallel zur Längsmittelachse verlaufenden Nut aufweisen. Hierbei bietet die parallel verlaufende Nut einen hinterschnittenen Raum für die Anordnung entsprechender Befestigungselemente.

Neben den Profilstücken selbst sind auch die zur Verbindung der Profilstücke verwendeten Klemmverbinder im Stand der Technik bekannt. Gattungsgemäße Klemmverbinder offenbart beispielsweise die DE 198 17 427. Die in dieser Druckschrift beschriebenen Klemmverbinder sind weit verbreitet und zeichnen sich durch einen Basiskörperbereich aus, der in das Hohlprofil des einen Profilstücks eingesetzt und dort fixiert wird. An der einen Stirnfläche des Klemmverbinders steht ein Ankerelement heraus, welches seinerseits in die Längsnut des anderen Profilstücks einsetzbar ist. Durch die Betätigung eines entsprechenden Spannmittels, beispielsweise einer Schraube oder dergleichen, kann dann mittels des Klemmverbinders eine relative Fixierung der beiden Profilstränge zueinander in der gewünschten Position erfolgen. Durch eine wiederholte Betätigung des Spannmittels in umgekehrter Weise lassen sich die Klemmspannungen aufneben, so daß eine einfache Demontage erfolgen kann.

Ein weiterer Klemmverbinder ist aus der GB 2 087 027 bekannt. Der hier beschriebene Klemmverbinder besteht aus einem einseitig verschließbaren Gehäuse, in welches ein in Längsrichtung des Gehäuses relativ verschiebbares Ankerelement einsetzbar ist. Als Spannmittel zur Erzeugung einer Relativbewegung zwischen Ankerelement und Gehäuse wird mit dieser Druckschrift eine Schraube vorgeschlagen.

Ein weiterer Klemmverbinder ist aus der Druckschrift FR 2 376 318 bekannt. Zur Verbindung von Profilstücken wird hier ein Klemmverbinder vorgeschlagen, der aus einem kastenartigen Basiskörper gebildet ist, innerhalb dessen ein federbelastetes Ankerelement längs verschieblich angeordnet ist. Mittels einer als Spannmittel dienenden Kegelschraube läßt sich die relative Fixierung des Ankerelementes in Längsrichtung des Basiskörpers verstellen.

Auch aus der DE 22 39 370 ist ein Klemmverbinder der vorgenannten Art bekannt. Der hier offenbarte Klemmverbinder weist zwei Hakenstücke auf, welche voneinander abgewandte Hakenöffnungen besitzen und jeweils in Richtung dieser Hakenöffnungen gegen eine Rückstellkraft voneinander weg verschwenkbar gelagert sind. Die Besonderheit des hier offenbarten Klemmverbinders besteht darin, daß als Betätigungselement zur Betätigung der Hakenstücke ein Exzenter vorgesehen ist, welcher die Hakenträger der jeweiligen Hakenstücke durchsetzt und um eine in Schwenkrichtung der Hakenstücke orientierte Achse drehbar ist, so daß bei einer Betätigung des Exzenters ein Auseinanderspreizen der Hakenstücke erreicht wird.

Die DE 43 28 832 offenbart ein aus Profilteilen bestehendes Gestell. Das Gestell verfügt über wenigstens eine Tragsäule, welche ihrerseits zumindest eine parallel flächig begrenzte Längsnut aufweist. In diese Längsnut der Tragsäule greift ein formschlüssig verklemmbares Spannschloß ein. Das Spannschloß ist aus einem U-förmigen Gehäuse mit zwei Schenkeln und einem diese miteinander verbindenden Steg gebildet. Ferner verfügt das Spannschloß über an den Schenkeln angeordnete Führungszapfen, die in die Längsnut eingreifen. Innerhalb des U-förmig ausgebildeten Gehäuses des Spannschlosses ist eine Haltezunge angeordnet, die schwenkbar gelagert und als doppelarmiger Hebel ausgebildet ist. Die Haltezunge weist ein Fenster auf, in welches der Rückzugzapfen eines Betätigungselements derart eingreift, daß bei einer Drehbewegung des Betätigungselements die Haltezunge anschließend an eine Verschwenkung im Spannsinne anziehbar ist.

Schließlich ist noch aus der DE 31 07 661 eine Verbindungsvorrichtung zum Verbinden eines in einer Seitenwand mit einem Loch versehenen Hohlprofils mit einem Stützteil bekannt. Das Stützteil weist eine der offenen Stirnseite des Hohlprofils zugewandte hinterschnittene Nut auf. Die Verbindungsvorrichtung ihrerseits besteht aus einem Gehäuse, das in das Hohlprofil eingeschoben wird und einem federnd abgestütztem Exzenter, dessen Drehknopf im Loch des Hohlprofils einrastet. Durch eine Betätigung des Exzenters wird ein in dem Gehäuse angeordneter Schieber zurückgezogen, wodurch ein am vorderen Ende des Schiebers angeordneter Haken, der aus dem Gehäuse der Verbindungsvorrichtung herausragt, die Nut hintergreift und die Verbindungsvorrichtung an dem Stützteil verriegelt.

Die vorbekannten Klemmverbinder sind mit Nachteil sehr kompliziert aufgebaute Elemente, die eine große Vielzahl von Einzelteilen sowie komplexe Montagevorgänge erforderlich machen. So offenbaren beispielsweise die vorgenannte DE 31 07 661, die GB 2 087 027 und die DE 43 28 832 jeweils Klemmverbinder, die aus einem im wesentlichen kastenförmigen Gehäuse bestehen, in welche jeweils längs verschieblich angeordnete Profilstücke eingesetzt sind. Die Profilstücke weisen an ihrem einen Ende einen Vorsprung nach Art eines nuthintergreifenden Ankerelements auf. Nach dem Einsetzen des Klemmverbinders in ein Hohlprofil, wobei die äußeren Abmessungen des Klemmverbindergehäuses mit den inneren Abmessungen des Hohlprofils im wesentlichen übereinstimmen, kann das Ankerelement in der Nut beispielsweise eines Vertikalständers angeordnet werden. Durch Betätigung des Betätigungselements, beispielsweise eines Exzenters oder einer Schraube, von außen durch eine Öffnung im Hohlprofil läßt sich das innere Klemmverbinderelement in Längsrichtung relativ zum Gehäuse derart bewegen, daß sich das Ankerelement in der Nut verklemmt. Bei den vorbekannten Ausführungsformen dienen die Verstellelemente zugleich auch der Verbindung der Einzelteile, so daß beispielsweise eine Verstellschraube als wesentlicher Bestandteil vor der Montage eingesetzt werden muß, da ansonsten die Einzelteile des Klemmverbinders nicht im Montagezustand zusammen bleiben. Hinzukommt, daß diese aus vielen Einzelteilen, die komplex zueinander geführt sind, bestehenden Klemmverbinder nur mit großem wirtschaftlichen Aufwand herstellbar sind.

Von wesentlichem Nachteil bei den vorbekannten Klemmverbindern ist, daß sich beim Aufbringen der Klemmkräfte die Betätigungselemente kraftübertragend zumeist an den Profilsträngen abstützen, beispielsweise im Bereich der Zugangsöffnung und der gegenüberliegenden Innenwandungen. Durch diese Maßnahme werden ständig Kräfte auf die Profile mehr oder weniger punktuell übertragen, so daß es hier beim Dauerbetrieb zu Beschädigungen kommen kann. Ferner ist bei den beispielsweise aus der DE 43 28 832 und der DE 31 07 661 vorbekannten Klemmverbindern von Nachteil, daß nach einem Verspannen die Krafteinleitung über das relativ zum Gehäuse bewegbare Profilelement punktuell beispielsweise in die Vertikalstützen erfolgt. Hierdurch wird nicht nur in nachteiliger Weise eine einseitige Belastung der Vertikalstütze bedingt, auch kann dies, sofern das Profilelement nicht symmetrisch an der Vertikalstütze angreift, zur Erzeugung eines Drehmoments führen, wodurch sich eine zusätzliche Ungleichbelastung der Profilstränge einstellt. Auch dies kann im Dauerbetrieb eine ungewollte Beschädigung der Profilstücke herbeiführen.

Insbesondere bei dem aus der FR 2 376 318 vorbekannten Klemmverbinder ist darüber hinaus von Nachteil, daß das im Gehäuse angeordnete Profilelement nur eine Spannverschiebung relativ zum Gehäuse in Längsrichtung durchführen kann. Hierdurch ergibt sich eine erschwerte Montage wie auch Demontage des Klemmverbinders.

Bei dem aus der DE 22 39 370 vorbekannten Klemmverbinder kommt zudem erschwerend hinzu, daß hier ein zusätzliches federelastisches Mittel erforderlich ist, daß die Klemmverbindereinzelteile umhüllend umschließt und sich im Inneren des Hohlprofils an der Innenwandung abstützt. Als wesentlicher Bestandteil des Klemmverbinders ist dieses federelastische Mittel vor der Montage einzusetzen, da ansonsten die Klemmverbindereinzelteile nicht im Montagezustand zusammen bleiben. Das Einbringen des hier vorgeschlagenen Klemmverbinders in das hierfür vorgesehene Hohlprofil, insbesondere die Lagefixierung des Betätigungsmittels, kann sich aufgrund der Tatsache, daß die Klemmverbindereinzelteile und das federelastische Mittel verschieblich zueinander angeordnet sind, als sehr kompliziert und aufwendig herausstellen. Dies gilt insbesondere dann, wenn sich beim Einbringen des Klemmverbinders in das Hohlprofil die Einzelteile relativ zueinander verschieben und die in den Einzelteilen ausgebildeten Bohrungen zum Aufnehmen des Betätigungselements nicht fluchtend übereinander stehen.

Ausgehend von diesem Stand der Technik liegt der Erfindung die **Aufgabe** zugrunde, unter Vermeidung der vorgenannten Nachteile einen Klemmverbinder der gattungsgemäßen Art dahingehend weiterzuentwickeln, daß dieser hinsichtlich der benötigten Einzelteile reduziert und vereinfacht werden kann, die Montage des Klemmverbinders bei der Herstellung einfacher ist, der Klemmverbinder insgesamt wirtschaftlich herstellbar und einsetzbar ist und die Kraftaufnahme möglichst nicht auf das Profil, sondern auf den Klemmverbinder selbst erfolgt. Darüber hinaus soll ein Klemmverbinder geschaffen werden, der in montiertem und verspanntem Zustand auch bei einer auftretenden Erschütterung oder unsachgemäßen Bedienung ein ungewolltes Lösen verhindert.

Zur technischen **Lösung** dieser Aufgabe wird mit der Erfindung vorgeschlagen, daß die Ausnehmungen im wesentlichen dreieckförmig ausgebildet sind und für eine Lagefixierung des Führungselementes wenigstens einen an einer Ausnehmungsseite angeordneten und nach innen gerichteten Vorsprung aufweisen.

Durch die Ausbildung dreieckförmig gestalteter Ausnehmungen wird in vorteilhafter Weise die Möglichkeit eröffnet, daß das im Gehäuse des Klemmverbinders angeordnete Profilelement in zwei Richtungen relativ zum Gehäuse bewegbar ist. Hierdurch kann eine einfache Montage und Demontage des Klemmverbinders erreicht werden, da es nicht weiter erforderlich ist, den Klemmverbinder mittels etwaiger Schwenkbewegungen in die zu hintergreifende Nut eines der Profilstücke einzusetzen, vielmehr kann der erfindungsgemäße Klemmverbinder auf einfache Weise in das Hohlprofil des anderen Profilstücks eingesetzt und das Ankerelement des Profilelements in die Längsnut des ersten Profilstücks verbracht werden. Aufgrund der relativen Verschiebbarkeit in zwei voneinander unabhängigen Bewegungsrichtungen kann durch eine einfache Betätigung des Betätigungselements eine Verbindung zwischen den beiden Profilstücken erreicht werden.

In vorteilhafter Weise weisen die dreieckförmigen Ausnehmungen einen zum Inneren der Ausnehmung hin gerichteten Vorsprung auf, der eine im verspannten Zustand des Klemmverbinders positionssichere Lage des Profilelements innerhalb des Gehäuses sicherstellt. Auf diese Weise wird erreicht, daß ein ungewolltes Lösen aus dieser verspannten Position, beispielsweise durch unsachgemäße Handhabung oder durch nicht vorhersehbare Erschütterungen, nicht möglich ist, da der Vorsprung eine ungewollte Bewegung des Profilelements sowohl in Längsals auch in Querrichtung des Profilelements verhindert. Der nach innen gerichtete Vorsprung wirkt mit einem in den Ausnehmungen geführten Führungselement zusammen, das in verspanntem Zustand des Klemmverbinders derart von dem nach innen gerichteten Vorsprung in seiner Lage fixiert wird, daß ein ungewolltes Verrutschen des Führungselements verhindert ist. Ein weiterer Vorteil dieser Ausgestaltung ergibt sich aus der Tatsache, daß das in den Ausnehmungen geführte Führungselement die Bewegung des Profilelements in beiden Richtungen, d. h. sowohl in Hohlprofillängsrichtung als auch in Hohlprofilquerrichtung, begrenzt. Hierdurch wird sichergestellt, daß ein zu weites Herausfahren des Profilelementes aus dem Gehäuse heraus bzw. in umgekehrter Richtung ein Überspannen, d. h. ein Einfahren des Profilelements in das Gehäuse hinein, unterbunden ist. In vorteilhafter Weise wird so eine definierte und immer gleiche Verspannkraft zwischen den einzelnen Profilstücken erzeugt. Beschädigungen, insbesondere Beschädigungen der hinterschnittenen Längsnut, können so wirkungsvoll verhindert werden.

Insgesamt wird so mit dem erfindungsgemäßen Klemmverbinder eine Verbindungslösung zur Verbindung von Profilstücken bereitgestellt, die eine einfache Montage bzw. Demontage der einzelnen zu verbindenden Profilstücke erlaubt, die zugleich eine sichere Lagepositionierung des Profilelements innerhalb des Gehäuses sicherstellt und die es zudem ermöglicht, eine immer gleiche, vordefinierte Verspannkraft zwischen den zu verbindenden Profilstücken zu erzeugen. Insbesondere von Vorteil ist hierbei, daß die sichere Lagepositionierung des Profilelements innerhalb des Gehäuses auch gegenüber unerwarteten Erschütterungen bzw. einer unsachgemäßen Handhabung des Klemmverbinders wirkt, so daß auch in solchen Fällen ein ungewolltes Verrutschen des Profilelements innerhalb des Gehäuses unterbunden ist.

Erfindungsgemäß ist der Klemmverbinder auf eine minimale Anzahl von Einzelbestandteilen reduziert, was zum einen die Herstellung vereinfacht als auch insgesamt die Montage bzw. Demontage weniger kompliziert gestaltet. Zusammengenommen bedingt dies eine gegenüber dem Stand der Technik weitaus verbesserte Wirtschaftlichkeit. Im einfachsten Fall sind zur Ausbildung des erfindungsgemäßen Klemmverbinders lediglich drei Elemente, nämlich ein Gehäuse, ein Profilelement sowie ein Betätigungselement, vonnöten. Das Profilelement ist in bevorzugter Weise im wesentlichen länglich ausgebildet und weist an seiner der Längsnut zugewandten Stirnfläche ein Ankerelement auf, welches in die hinterschnittene Längsnut des einen Profilstücks hineinragt. Das Profilelement ist sowohl in Hohlprofillängsrichtung als auch in Hohlprofilquerrichtung relativ zum Gehäuse verschiebbar angeordnet. Geführt wird das Profilelement in seiner Bewegung durch Führungselemente, die wegbegrenzt in den Führungsbahnen bildenden Ausnehmungen des Gehäuses gelagert sind. Durch das Betätigungselement, beispielsweise einem Exzenter, kann durch entsprechende Krafteinleitung eine Bewegung des Profilelements relativ gegenüber dem Gehäuse bewirkt werden. Die mögliche Bewegung des Profilelements ist hierbei durch die in den Ausnehmungen des Gehäuses geführten Führungselemente begrenzt.

Für eine einfache Montage des erfindungsgemäßen Klemmverbinders ist das Profilelement in das Gehäuse einzuführen. Alsdann sind die Führungselemente einzusetzen. Bevorzugterweise sind die Führungselemente stiftförmig ausgebildet und durchragen im Profilelement ausgebildete, korrespondierende Bohrungen. Auf beiden Seiten des Profilelements werden dann die jeweils überstehenden Enden des stiftförmig ausgebildeten Führungselements in den Ausnehmungen des Gehäuses geführt. Im dritten und letzten Montageschritt des erfindungsgemäßen Klemmverbinders wird das Betätigungselement, beispielsweise ein Exzenter, in die dafür im Gehäuse vorgesehene Öffnung eingesetzt. Das Betätigungselement seinerseits durchragt dann die Öffnung des Gehäuses und wirkt mit einer im Profilelement ausgebildete Auflauffläche zusammen. Sobald das Betätigungselement im montierten Zustand des Klemmverbinders betätigt wird, läuft ein dafür vorgesehener Abschnitt des Betätigungselements auf die Auflauffläche des Profilelements auf und bewirkt hierdurch eine Relativverschiebung des Profilelements gegenüber dem Gehäuse. Entsprechend der dreieckförmigen Ausgestaltung der Führungsbahnen bildenden Ausnehmungen im Gehäuse ist hierbei eine Relativverschiebung des Profilelements sowohl in Längs- als auch in Querrichtung möglich. Gemäß einer alternativen Ausgestaltungsform sind die stiftförmigen Führungselemente und das Profilement einstückig, beispielsweise als Gußteil ausgebildet. Für eine Montage des Klemmverbinders sind die Ausnehmungen im Gehäuse zur unteren Gehäusekante hin offen, so daß die einstückig mit dem Profilement ausgebildeten Führungselemente in die Ausnehmungen im Gehäuse eingeführt werden können. Sobald das Profilement samt des Führungselements in das Gehäuse eingesetzt ist, wird das Betätigungselement in die dafür im Gehäuse vorgesehene Öffnung eingebracht. Dies geschieht in gleicher Weise wie auch bei der zuvor beschriebenen Ausführungsform. Durch die einstückige Ausgestaltung von Führungselement und Profilelement wird in vorteilhafter Weise eine vereinfachte Montage des erfindungsgemäßen Klemmverbinders erreicht, dann ist es nicht erforderlich, in einem separaten Montageschritt die Führungselemente in das Profilelement einzusetzen. Dieser Montageschritt entfällt bei einer einstückigen Ausgestaltung von Führungselementen und Profilelement.

Gemäß einem weiteren Merkmal der Erfindung ist vorgesehen, daß das Betätigungselement eine Schraube mit Kegelspitze ist, welche bei einer Betätigung mit einer schräg zur Längsrichtung verlaufenden Auflauffläche im Profilelement zusammenwirkt. Dabei kann die schräg zur Längsrichtung verlaufende Auflauffläche V-förmig ausgebildet sein, wobei schräg zur Längsrichtung in Bezug auf eine Längsmittellinie des Profilelements bzw. auf eine Längsmittellinie des Hohlprofils zu verstehen ist. Das so ausgebildete Profilelement ist dann mit dem Gehäuse derart gekoppelt, daß es relativ zu diesem sowohl in Längsrichtung als auch in Querrichtung bewegbar ist.

Alternativ zum vorgenannten Betätigungselement wird mit der Erfindung vorgeschlagen, daß das Betätigungselement ein Exzenter ist, der in eine korrespondierende Betätigungsbahn im Profilelement hineinragt. Hierbei ist in vorteilhafter Weise vorgesehen, daß der Exzenter aus einem Exzenterkopf und einem außermittig am Exzenter angeordneten Exzenterabschnitt gebildet ist, wobei der Exzenterabschnitt bolzenförmig ausgebildet ist und einen im wesentlichen kreisförmigen Querschnitt mit zumindest einer plan ausgebildeten Anlagefläche aufweist. Diese vorteilhafte Ausgestaltung ermöglicht es, daß durch eine einfache Drehbewegung des Exzenters eine relative Verschiebung von Gehäuse und Profilelement bewirkt wird. Hierbei sind die im Profilelement ausgebildete Betätigungsbahn und der eine plane Anlagefläche aufweisende Exzenterabschnitt derart aufeinander abgestimmt und dimensioniert, daß im Sinne einer "Schnellspannfunktion" eine viertel Umdrehung des Exzenters ausreicht, um das Profilelement aus seiner einen Extremlage in die andere Extremlage zu verfahren. Eine viertel Umdrehung des Exzenters reicht somit aus, um den Klemmverbinder aus seiner nicht verspannten in die verspannte Position zu verfahren. Ein Lösen des Klemmverbinders kann in selbstverständlicher Weise ebenfalls mit der Ausübung nur einer viertel Umdrehung des Exzenters durchgeführt werden. Diese vorteilhafte Ausgestaltung von Exzenter und korrespondierender Betätigungsbahn innerhalb des Profilelements ermöglicht eine einfache Montage bzw. Demontage der mittels eines erfindungsgemäßen Klemmverbinders zu verbindenden Profilstücke. Die durch die in den Ausnehmungen des Gehäuses geführten Führungselemente begrenzte Bewegung des Profilelements stellt hierbei sicher, daß eine Überdrehung unterbunden ist. Eine über die viertel Umdrehung hinausgehende Betätigungsbewegung kann somit wirkungsvoll verhindert werden. Gemäß einer bevorzugten Ausgestaltungsform der Erfindung weist die im Profilelement ausgebildete Betätigungsbahn eine plan ausgebildete Begrenzungsfläche auf, die mit dem Exzenterabschnitt derart zusammenwirkt, daß aus der Null-Lage heraus ein Linksverdrehen des Exzenters nicht möglich ist. Auf diese Weise wird eine Verdrehbegrenzung geschaffen, welche sicherstellt, daß über die Null-Lage heraus eine ungewollte Linksverdrehung des Exzenters unterbunden ist.

Das Führungselement ist gemäß einem weiteren vorteilhaften Vorschlag der Erfindung als Stiftelement ausgebildet, wobei vorgesehen ist, daß das Stiftelement in eine korrespondierenden Durchgangsbohrung im Profilelement eingesetzt ist und in der Länge derart bemessen ist, daß es im wesentlichen der Gehäusebreite entspricht und jeweils endseitig in die im Gehäuse ausgebildeten Ausnehmungen hineinragt. Wie bereits zuvor erläutert, eröffnet diese Art der Ausgestaltung insbesondere eine leichte und wenig aufwendig durchzuführende Montage bzw. Demontage des Klemmverbinders. Alternativ hierzu kann auch vorgesehen sein, daß Führungselement in Form eines am Profilelement angeformten Vorsprungs auszubilden. Durch diese vorteilhafte Ausgestaltung kann nochmals die Anzahl der benötigten Einzelteile reduziert werden. Für eine leichte Montage sind die beidseitig am Profilelement vorzusehenden Vorsprünge teilelastisch auszubilden, so daß das Profilelement in das Gehäuse des Klemmverbinders einsetzbar ist. Verwendet werden können beispielsweise federbelastete Vorsprungelemente, die für ein Einsetzen des Profilelements in das Gehäuse entgegen der Federkraft zusammengedrückt werden und nach einem Einsetzen des Profilelements in die ursprüngliche Lage zurückverfahren und dabei in die Ausnehmungen im Gehäuse hineinragen. Für eine Demontage wäre es dann lediglich erforderlich, durch die Ausnehmungen im Gehäuse hindurchzugreifen, die Vorsprungelemente wieder entgegen der Federkraft einzudrücken und das Profilelement aus dem Gehäuse herauszubewegen. Federbelastete Vorsprungelemente können beispielsweise Kugeln, Stifte, Dorne oder dergleichen sein. Auch können vollelastische Elemente eingesetzt werden, wie beispielsweise aus Gummi oder aus federelastischem Kunststoff bestehende Elemente. Diese werden für eine Montage des Klemmverbinders einfach zusammengedrückt, so daß das Profilelement auf einfache Weise in das Gehäuse einsetzbar ist. Sobald das Profilelement in das Gehäuse eingesetzt ist und seine bestimmungsgemäße Lage eingenommen hat, dehnen sich die elastischen Elemente wieder aus und ragen alsdann in die im Gehäuse ausgebildeten Ausnehmungen hinein. Eine Demontage des Klemmverbinders erfolgt entsprechend in umgekehrter Reihenfolge.

Gemäß einem weiteren Merkmal der Erfindung ist in Bezug auf wenigstens eine relative Bewegungsrichtung zwischen Gehäuse und Profilelement ein elastisches Element angeordnet. Vorzugsweise wird hierzu eine Spiralfeder eingesetzt. Dieses elastische Element bewirkt, daß der Klemmverbinder vorzugsweise in entspannte Stellung verfährt. Ein verspannen des Klemmverbinders erfolgt mithin entgegen der Wirkrichtung eines solchen elastischen Elements. Hierdurch wird sichergestellt, daß bei Nichtgebrauch des Klemmverbinders Profilelement und Gehäuse in nicht verspannter Position gehalten werden. Das Profilelement ist in dieser Stellung weitmöglichst aus dem Gehäuse herausgefahren und ermöglicht so bei einem Einsetzen in eine korrespondierende Längsnut den größtmöglichsten Montagespielraum. Nach einem Einbringen des Klemmverbinders kann dann auf einfache Weise mittels Betätigung des Betätigungselements eine kraftübertragende Verbindung zwischen den beiden durch den Klemmverbinder verbundenen Profilstücke bewirkt werden. Die Anordnung eines elastischen Elements zur Vorspannung von Profilelement und Gehäuse bewirkt mithin, daß ein nicht in Gebrauch befindlicher Klemmverbinder stets in einer montagebereiten Lage gehalten wird. Dies ermöglicht zum einen eine schnelle Montage, als auch zum anderen eine schnelle Demontage, denn wird bei einem Lösen der Klemmverbindung, d. h. bei einem Entspannen des Klemmverbinders, ein Zurückverfahren von Profilelement und Gehäuse in die montagebereite Ausgangslage durch das elastische Element unterstützt. Gemäß einer bevorzugten Ausführungsform wirkt das elastische Element hierbei sowohl anteilig in Längsrichtung als auch in Querrichtung des Profilelements. Gemäß einer bevorzugten Ausführungsform kann hierbei vorgesehen sein, daß die Wirkrichtung des elastischen Elements und die Längsrichtung des Profilelements unter einem Winkel von vorzugsweise 45° aufeinander stehen. Auf diese Weise wird erreicht, daß das elastische Element zu gleichen Teilen in Längsrichtung als auch in Querrichtung wirkt.

Gemäß einem weiteren Merkmal der Erfindung weist das Ankerelement eine T-Kopf-Form auf, wobei die dem Profilelement zugewandten Stirnflächen des Ankerelements wenigstens einen Vorsprung aufweisen. Auf diese Weise wird ein besonders sicherer Halt des Ankerelements erreicht. Bezüglich des Vorsprungs ist die Erfindung hierbei nicht auf die Verwendung spezieller Ausgestaltungen beschränkt, vielmehr kann der Vorsprung dornen-, prisma-, pyramidenförmig oder dergleichen ausgebildet sein. Die T-Kopf-Form des Ankerelements bietet zudem den Vorteil der nicht drehmomentbelasteten Krafteinleitung.

Der erfindungsgemäße Klemmverbinder besteht vorzugsweise aus Metall, beispielsweise aus Zink-Druckguß oder dergleichen, ist vergleichsweise einfach und mit wenigen Einzelteilen aufgebaut und montierbar bzw. demontierbar. Darüber hinaus ist er mit einfachen Mitteln einsetzbar und aufgrund der möglichen Schnellspannfunktion mittels Exzenter gleichfalls auch leicht handhabbar. Durch die Verwendung von anschlagbegrenzenden Führungen werden die Klemmkräfte zudem nicht mehr auf die Hohlprofile selbst übertragen sondern stattdessen auf die Klemmverbinderprofilelemente, so daß die Hohlprofile geschont werden. Anstelle von Metall sind auch Kunststoffe einsetzbar.

Weitere Vorteile und Merkmale der Erfindung ergeben sich aus der Beschreibung anhand der Figuren. Dabei zeigen:
- Fig. 1a: eine teilgeschnittene Seitenansicht des erfindungsgemäßen Klemmverbinders in einer ersten Stellung;
- Fig. 1b: eine teilgeschnittene Seitenansicht des erfindungsgemäßen Klemmverbinders in einer zweiten Stellung;
- Fig. 1c: eine teilgeschnittene Seitenansicht des erfindungsgemäßen Klemmverbinders in einer dritten Stellung;
- Fig. 2a: eine Draufsicht von oben auf das Gehäuse des erfindungsgemäßen Klemmverbinders;
- Fig. 2b: eine Draufsicht von unten auf das Gehäuse des erfindungsgemäßen Klemmverbinders;
- Fig.2c: eine geschnittene Seitenansicht des Gehäuses des erfindungsgemäßen Klemmverbinders;
- Fig.2d: eine geschnittene Seitenansicht des Gehäuses des erfindungsgemäßen Klemmverbinders gemäß einer alternativen Ausgestaltungsform;
- Fig.3a: eine Seitenansicht des Profilelements des erfindungsgemäßen Klemmverbinders;
- Fig. 3b: eine Frontansicht von vorne des Profilelements des erfindungsgemäßen Klemmverbinders;
- Fig. 3c: eine Draufsicht von oben auf das Profilelement des erfindungsgemäßen Klemmverbinders;
- Fig. 3d: eine Draufsicht von oben auf das Profilelement des erfindungsgemäßen Klemmverbinders gemäß einer alternativen Ausgestaltungsform;
- Fig. 4: eine Seitenansicht des erfindungsgemäßen Betätigungselements in Form eines Exzenters und
- Fig. 5: eine Seitenansicht des erfindungsgemäßen Betätigungselements in Form einer Kegelschraube.

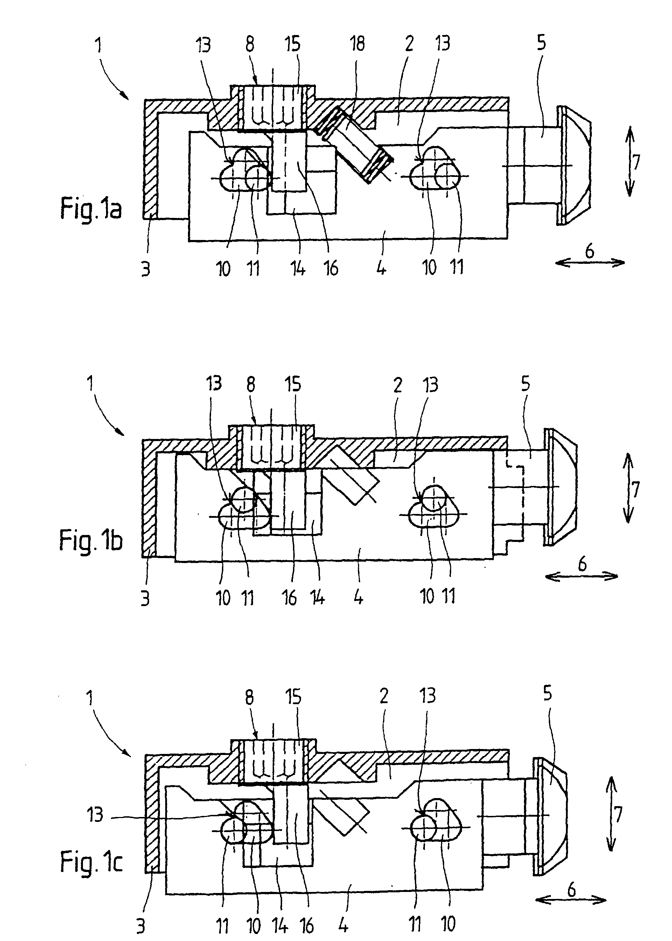

Der in den Fign. 1a, 1b und 1c gezeigte Klemmverbinder ist aus einem Basiskörper 2 und einem am Basiskörper 2 angeordneten, in der Längsnut eines Profilstücks verklemmbaren Ankerelement 5 gebildet. Der Basiskörper 2 besteht seinerseits aus einem Gehäuse 3 sowie einem innerhalb des Gehäuses 3 angeordneten Profilelement 4. Gemäß der in den Fign. 1a bis 1c gezeigten bevorzugten Ausführungsform ist das Ankerelement 5 einstückig mit dem Profilelement 4 verbunden.

Das Profilelement 4 ist samt angeformten Ankerelement 5 relativ zum Gehäuse 3 bewegbar angeordnet und sowohl in Profillängsrichtung 6 als auch in Profilquerrichtung 7 verschiebbar. Erfindungsgemäß weist das Gehäuse 3 in beiden Seitenwandungen jeweils zwei Ausnehmungen 10 auf. Im gezeigten Ausführungsbeispiel sind diese Ausnehmungen 10 im wesentlichen dreieckförmig ausgebildet und weisen jeweils einen an einer Ausnehmungsseite angeordneten, nach innen gerichteten Vorsprung 13 auf. Diese Ausnehmungen 10 sind als Führungsbahnen ausgebildet und dienen der Aufnahme von Führungselementen, die im bevorzugten Beispiel als Stiftelemente 11 ausgebildet sind. Diese Stiftelemente 11 durchragen das Profilelement 4, wozu dieses entsprechende Durchgangsbohrungen 12 aufweist. Die Länge der Stiftelemente 11 ist dabei derart bemessen, daß sie im wesentlichen der Gehäusebreite des Gehäuses 3 entsprechen. Auf diese Weise wird sichergestellt, daß die Stiftelemente 11 das Profilelement 4 vollständig durchragen und auf beiden Seiten des Profilelements 4 soweit herausstehen, daß sie jeweils endseitig in den die Führungsbahnen bildenden Ausnehmungen 10 des Gehäuses 3 sicher geführt werden.

Entsprechend der dreieckförmigen Ausbildung der Ausnehmungen 10 erlauben diese eine Bewegung des mit den Stiftelementen 11 verbundenen Profilelements 4 sowohl in Längsrichtung 6 als auch in Querrichtung 7. Fig. 1a zeigt den Klemmverbinder 1 in entspannter Stellung. Das Profilelement 4 ist hierbei gegenüber dem Gehäuse 3 sowohl in Längsrichtung 6 als auch in Querrichtung 7 in die äußerst mögliche Stellung verfahren, in der das Profilelement 4 am weit möglichsten aus dem Gehäuse 3 herausragt. Im Vergleich hierzu zeigt Fig. 1 beine Stellung des Klemmverbinders, bei der das Profilelement 4 in der Zeichnungsebene nach oben, d. h. in Querrichtung 7, verschoben ist. Aufgrund der dreieckförmigen Ausbildung der Ausnehmung 7 ist eine solche nach oben gerichtete Verschiebung des Profilelements 4 auch mit einer Verschiebung in Längsrichtung verbunden, vorliegend bezogen auf die Zeichnungsebene nach links. Der Fig. 1b ist deutlich zu entnehmen, daß das Profilelement 4 im Unterschied zu der in Fig. 1a dargestellten Position weiter nach oben, d. h. in Richtung auf das Gehäuse 3, als auch weiter nach links, d. h. in Richtung auf den Exzenter 8, verschoben ist. Fig. 1c zeigt eine weitere Stellung des Profilelements 4. In dieser Stellung ist das Profilelement 4 noch weiter in Längsrichtung 6 verschoben und nimmt in der hier dargestellten Ausrichtung die weit möglichste Verschiebung nach innen an. Im Vergleich zu der in Fig. 1a dargestellten Position befindet sich das Profilelement 4 in Bezug auf das Gehäuse 3 in gleicher Horizontallage. Allerdings ist das Profilelement 4 bezogen auf die Längsrichtung 6 aus der einen Extremposition, nämlich der ausgefahrenen Position nach Fig. 1a, in die andere Extremposition, nämlich der eingefahrenen Position nach Fig. 1c, verfahren. Fig. 1a stellt mithin den Klemmverbinder in gelöstem Zustand, Fig. 1c hingegen in verspanntem Zustand dar. Im verspannten Zustand gemäß Fig. 1c ist entsprechend der Abstand zwischen dem Ankerelement 5 und dem Gehäuse 3 auf ein Minimum reduziert, wohingegen im ausgefahrenen Zustand des Profilelements 4 gemäß Fig. 1a der Abstand zwischen Ankerelement 5 und Gehäuse 3 ein Maximum annimmt. Gemäß einer bevorzugten Ausführungsform ist der Abstand im ausgefahrenen Zustand des Profilelements 4 zwischen Ankerelement 5 und Gehäuse 3 ca. 12 mm, wohingegen der Abstand zwischen Ankerelement 5 und Gehäuse 3 im verspannten Zustand des Klemmverbinders 1 einen Abstand von nur ca. 6 mm aufweist.

Der erfindungsgemäß ausgebildete Vorsprung 13 stellt sicher, daß das Stiftelement 11 und damit auch das Profielement 4 in seiner in Fig. 1c gezeigten Lage positioniert bleibt. Ein ungewolltes "nach oben" rutschen des Profilelements wird hierdurch wirkungsvoll verhindert. Hieraus ergibt sich, daß auch unter Einwirkung von Erschütterungen oder einer unsachgemäßen Handhabung des Klemmverbinders 1 eine ungewollte Bewegung des Profilelements 4 unterbunden ist. Das Profilelement 4 und mithin auch das Ankerelement 5 verbleiben somit in der eingestellten Verspannstellung gemäß Fig. 1c.

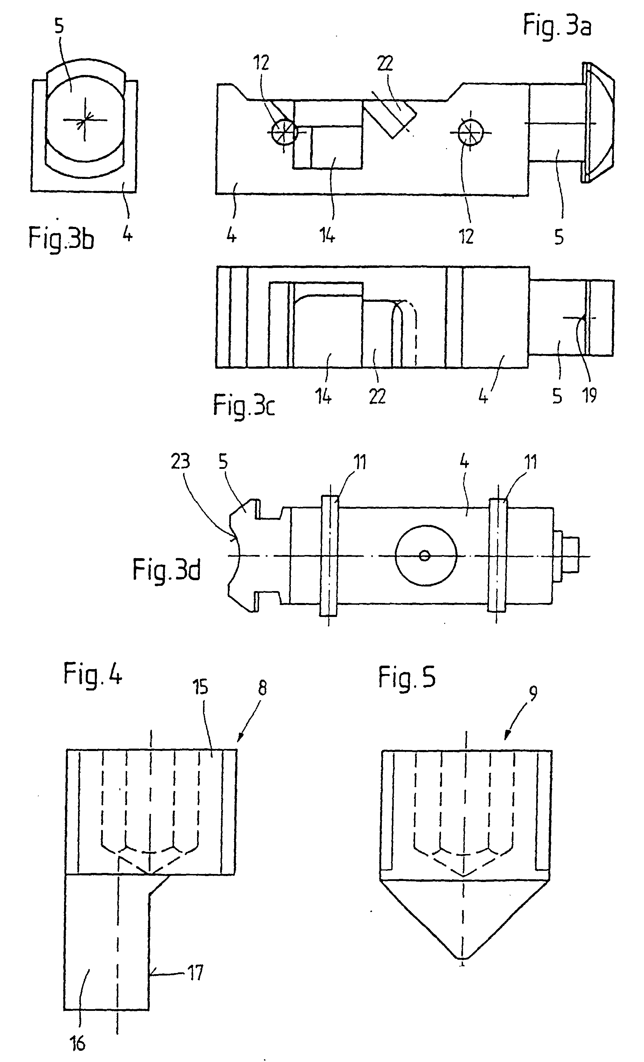

Für ein Verschieben des Profilelements 4 innerhalb des Gehäuses 3 ist ein Betätigungselement vorgesehen, das gemäß den Fign. 1a bis 1c in bevorzugter Weise als Exzenter 8 ausgebildet ist. Der Exzenter 8 weist einen Exzenterkopf 15 sowie einen Exzenterabschnitt 16 auf. Der Exzenterabschnitt 16 wirkt korrespondierend mit der im Profilelement 4 ausgebildeten Betätigungsbahn 14 zusammen. Wie insbesondere Fig. 4 entnommen werden kann, weist der Exzenterabschnitt 16 eine plan ausgebildete Anlagefläche 17 auf. Diese Anlagefläche 17 sowie die im Profilelement 4 ausgebildete Betätigungsbahn 14 sind derart aufeinander abgestimmt, daß eine viertel Umdrehung des Exzenters ausreichend ist, um das Profilelement 4 aus der einen Extremposition gemäß Fig. 1a in die andere Extremposition gemäß Fig. 1c zu verfahren. Eine viertel Umdrehung in umgekehrter Richtung bewirkt entsprechend ein Verfahren von Fig. 1c nach Fig. 1a. In vorteilhafter Weise ermöglicht diese Ausgestaltung des Exzenters 8 bzw. der Betätigungsbahn 14 ein Verfahren des Profilelements 4 nach Art einer Schnellspannfunktion. Mit einer viertel Umdrehung des Exzenters 8 kann der Klemmverbinder sowohl gelöst als auch verspannt werden. Zudem ist gemäß einem besonders vorteilhaften Vorschlag der Erfinder vorgesehen, daß die plan ausgebildete Anlagefläche 17 des Exzenterabschnitts 16 mit der gleichfalls plan ausgebildeten Begrenzungsfläche innerhalb der Betätigungsbahn 14 zusammenwirkt. Hierdurch wird eine Verdrehbegrenzung gegen Linksdrehung des Exzenters 8 aus der Null-Lage heraus sichergestellt, so daß ein Profilement 4, welches sich bereits in der weit mögilchsten Ausfahrposition befindet, durch eine ungewollte Drehbewegung des Exzenters nicht noch weiter verfahren werden kann.

Die in den Ausnehmungen 10 geführten Stiftelemente 11 werden durch die Ausnehmungen 10 selbst in ihrer Bewegungsfreiheit begrenzt. Sie stellen mithin einen Anschlag für die Bewegung des Profilelements 4 dar. Auf diese Weise wird sichergestellt, daß ein Verfahren des Profilelements 4 sowohl in die eine Richtung als auch in die andere Richtung nicht ungewollt dazu führen kann, daß ein ungewollt weites Verfahren des Profilelements 4 stattfindet. Bezogen auf die Stellung gemäß Fig. 1a bedeutet dies, daß das Profilelement 4 aus dem Gehäuse 3 nicht ungewollt weiter herausgefahren werden kann, bezogen auf Fig. 1c bedeutet dies im Umkehrschluß, daß ein Verspannen, d. h. ein Verschieben in der Zeichnungsebene nach links, nicht zu weit erfolgen kann, so daß die Aufbringung einer zu großen Klemmkraft unterbunden ist.

Alternativ zum vorgeschriebenen Exzenter 8 kann als Betätigungselement auch eine Schraube 9 eingesetzt werden. Das Ausführungsbeispiels eines solchen Betätigungselements zeigt Fig. 5. Wie dieser Figur zu entnehmen ist, ist die Schraube 9 vorzugsweise als Kegelschraube ausgeführt. Entsprechend dieser Ausbildung ist die Betätigungsbahn 14 im Profilelement 4 beispielsweise als V-Nut ausgebildet. Diese Ausbildung ist in den Ausführungsbeispielen nicht gezeigt. Diese V-Ausbildung bewirkt, daß die Kegelspitze der Schraube 9, welche in die V-Nut hineinragt und mit dieser zusammenwirkt, daß bei einer Drehbewegung der Schraube 9, womit ein Einschrauben bzw. ein Ausschrauben der Schraube 9 einhergeht, das Profilelement 4 in Längsrichtung 6 bewegt wird. Infolge der dreieckförmigen Ausbildung der Ausnehmungen 10 ist diese Längsbewegung mit einer Bewegung in Querrichtung 7 gekoppelt. Teilt man die einzelnen Bewegungsrichtungen auf, so ergibt sich, daß die in Fig. 1a gezeigte Position des Profilelements 4 die Ausgangsposition darstellt. In dieser Position ist der Klemmverbinder 1 vollständig gelöst. Wird nun die Schraube 9 eingeschraubt, so bewirkt dies ein Verschieben des Profilelements 4 in Profillängsrichtung 6 bezogen auf die Zeichnungsebene nach links. Es stellt sich dann der in Fig. 1c dargestellte Verspannzustand des Klemmverbinders 1 dar. Bei einem Lösen der Schraube 9 wird in entsprechend umgekehrter Richtung verfahren, so daß das Profilelement 4 zurück in die in Fig. 1a gezeigte Stellung zurückverfährt.

Zur Unterstützung eines Zurückverfahrens des Profilelements 4 in die in Fig. 1a gezeigte Ausgangsposition ist eine Feder 18 vorgesehen. Gezeigt ist diese Feder 18 in der Fig. 1a, in den Fign. 1b bzw. 1c ist sie durch eine entsprechende Linie lediglich angedeutet. Vorzugsweise ist die Feder 18 derart angeordnet, daß ihre Wirkrichtung und die Profillängsrichtung 6 unter einem 45° Winkel aufeinander stehen. Hierdurch wird erreicht, daß die Federwirkung zu gleichen Teilen sowohl in Längsrichtung 6 als auch in Querrichtung 7 wirkt, so daß ein Verfahren des Profilelements 4 in die in Fig. 1a gezeigte Ausgangsposition zu gleichen Teilen sowohl in Profillängsrichtung als auch in Profilquerrichtung unterstützt wird.

Bevorzugterweise werden sowohl das Gehäuse 3 als auch das Profilelement 4 als Gußteile, beispielsweise als Zink-Druckgußteile, ausgebildet. Nach der Herstellung können die beiden Teile auf einfache Weise zum erfindungsgemäßen Klemmverbinder zusammengesetzt werden. Zu diesem Zweck wird zunächst unter Zwischenordnung der Feder 18 das Profilelement 4 innerhalb des Gehäuses 3 angeordnet. Im Anschluß daran werden die Stiftelemente 11 durch die seitlichen Ausnehmungen 10 in der Gehäusewandung durch die Bohrungen 12 im Profilelement 4 hindurch bis zur anderen Ausnehmung 10 auf der anderen Seitenwandung des Gehäuses 3 hindurch gesteckt. Der Klemmverbinder 1 ist nunmehr vollständig montiert. Für ein Verfahren von Gehäuse 3 und Profilelement 4 relativ zueinander wird in die Öffnung 20 des Gehäuses 3 ein Betätigungselement, vorzugsweise ein Exzenter 8, eingeschraubt. Dieser wirkt mit der schon beschriebenen Betätigungsbahn 14, weiche im Profilelement 4 ausgebildet ist, zusammen.

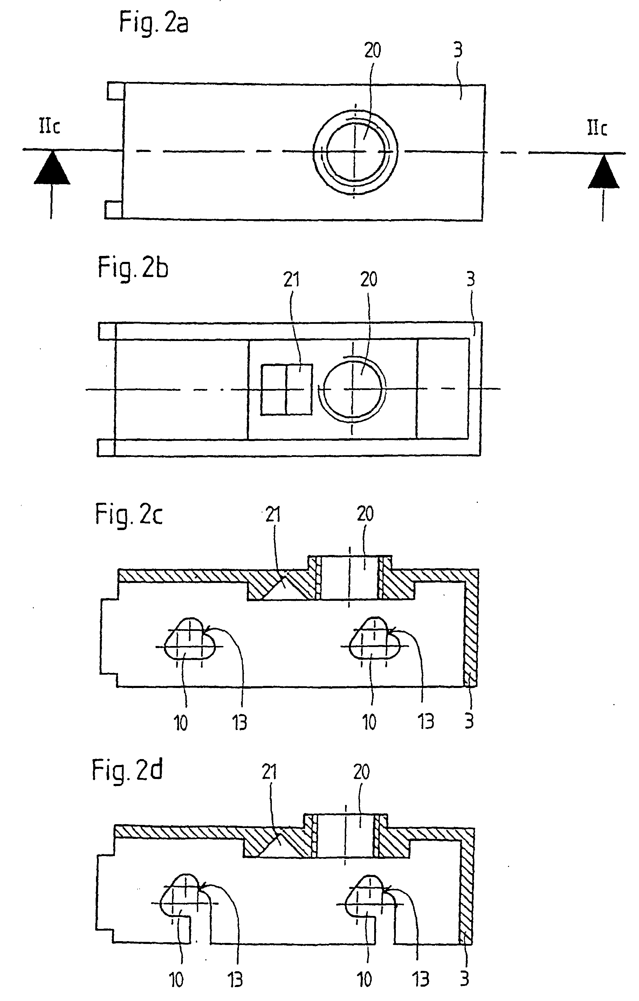

Das Gehäuse 3 ist im Detail in den Fign. 2a, 2b, 2c sowie 2d gezeigt. 2a zeigt hierbei das Gehäuse 3 in einer Draufsicht von oben. Zu erkennen ist hier die mit Gewinde versehene Öffnung 20, in die der Exzenter 8 zur Betätigung des Profilelement 4 eingeschraubt wird. 2b zeigt das Gehäuse in einer Ansicht von unten. Deutlich zu entnehmen ist dieser Darstellung der Aufnahmebereich 21, welcher im montierten Zustand des Klemmverbinders 1 der Aufnahme der Feder 18 dient. Fig. 2c zeigt das Gehäuse 3 in geschnittener Ansicht. Zu entnehmen ist dieser Darstellung insbesondere die dreieckförmige Ausgestaltung der Ausnehmungen 10. Wie dieser Figur ferner entnommen werden kann, weist eine jede Ausnehmung für eine genaue Lagefixierung der in dieser Figur nicht dargestellten Führungselemente 11 wenigstens einen an einer Ausnehmungsseite angeordneten und nach innen gerichteten Vorsprung 13 auf. Alternativ zu der hier dargestellten Ausführungsform kann der Vorsprung 13 auch auf andere Weise ausgebildet sein, entscheidend ist lediglich, daß die Führungselemente und damit auch das Profilelement in der in Fig. 1c dargestellten Position des Profilelements 4 gehalten werden und nicht ungewollt in eine Position gemäß Fig. 1b, d. h. in Zeichnungsebene nach oben, verrutschen.

Gemäß einer alternativen Ausgestaltungsform der Erfindung sind die Stiftelemente 11 und das Profilement 4 einstückig, beispielsweise als Gußteil, ausgebildet. Auch können die Stiftelemente 11 vom Profilelement 4 angeformt sein, beispielsweise durch Schweißen. Für eine Montage des Klemmverbinders sind die im Gehäuse ausgebildeten Ausnehmungen 10 zur unteren Gehäusekante hin offen. Dies zeigt Figur 2d. Diese alternative Ausgestaltungsform des Klemmverbinders vereinfacht in vorteilhafter Weise die Gesamtmontage, denn es fällt bei dieser Ausführungsform der separate Montageschritt des Einführens der Stiftelemente 11. Das Profilelement 4 Wird einfach von unten in das Gehäuse 3 eingeführt, wobei die einstückig an das Profilelement 4 angeformten Stiftelemente 11 durch die sich zur unteren Gehäusekante hin erstreckenden Öffnungen hindurch in die Ausnehmungen 10 geführt werden. Die weitere Montage entspricht dann der bereits zuvor beschriebenen.

Die Fign. 3a, 3b und 3c zeigen im Detail das Profilelement 4. Hierbei zeigt Fig. 3a das Profilelement 4 in einer Seitenansicht. Deutlich zu erkennen sind hier die Durchgangsbohrungen 12, durch die hindurch die stiftartig ausgebildeten Führungselemente 11 hindurchgeführt werden. Diese sind nach einer Montage des Klemmverbinders fest mit dem Profilelement 4 verbunden und führen dieses innerhalb der von den Ausnehmungen 10, in die die Führungselemente 11 endseitig hineinragen, vorgegebenen Bahn. Zur Aufnahme der zwischen Gehäuse und Profilelemente 4 angeordneten Feder 18 verfügt das Profilelement 4 über einen entsprechenden Aufnahmebereich 22, in den das profilelementseitige Ende der Feder 18 hineinragt. Wie insbesondere Fig. 3b entnommen werden kann, ist das Ankerelement 5 T-Kopf-förmig ausgebildet und weist in einer Draufsicht von vorn eine im wesentlichen abgerundete Kontur auf. Je nach gewünschtem Einsatzgebiet, d. h. je nach zu hintergreifender Nut im Profilstück, kann das Ankerelement 5 wahlweise entsprechend ausgebildet sein. Bevorzugterweise weist das Ankerelement 5 an seiner Unterseite, d. h. an seiner im zusammengebauten Zustand des Klemmverbinders der dem Gehäuse zugewandten Stirnfläche, Vorsprünge 19 auf. Diese Vorsprünge 19 sind vorzugsweise dornen-, prisma- oder pyramidenförmig ausgebildet und dienen dazu einen verbesserten Halt des Ankerelements im verspannten Zustand des Klemmverbinders zu bewirken. Insbesondere können so zwei miteinander über den erfindungsgemäßen Klemmverbinder verbundene Profilstücke rutschfest aneinander gekoppelt werden. Zu diesem Zweck bietet sich insbesondere an, die Vorsprünge 19 aus einen elastischen Material, beispielsweise aus Gummi, auszubilden.

Eine alternative Ausgestaltungsform des Profilelements 4 zeigt Fig. 3d. Bei der hier dargestellten Ausführungsform sind das Profilelement 4 und die Stiftelemente 11 einstückig miteinander verbunden. Das Ankerelement 5 ist ebenso, wie in Fign. 3a bis 3c gezeigt, im wesentlichen T-Kopf-förmig ausgebildet, weist jedoch stirnseitig eine Ausnehmung 23 auf, in welche unter Umständen im hier nicht gezeigten Profilstück ausgebildete Vorsprünge hineinragen können. Bei der in Fig. 3d dargestellten Ausführungsform nimmt der Radius der Ausnehmung Werte von ca. R=6,6 an. Je nach Ausbildung der hier nicht dargestellten Profilstücke bzw. des Ankerelements 5 des Profilelements 4 sind selbstverständlich auch andere Radien möglich. Das mit den einstückig angeformten Stiftelementen 11 versehene Profilelement 4 wird mit einem Gehäuse 3 des Klemmverbinders zusammen, ähnlich wie es in Fig. 2d dargestellt ist. Um das mit den einstückig ausgebildeten Stiftelementen 11 versehene Profilelement 4 in das Gehäuse 3 des Klemmverbinders einführen zu können, weisen die im Gehäuse 3 vorgesehenen Ausnehmungen 10 zur unteren Gehäusekante hin ausgerichtete Öffnungen auf, durch die hindurch die Endbereiche der Stiftelemente 11 in die Ausnehmungen 10 eingeführt werden können. Im Unterschied zu den zuvor erläuterten Profilelementen 4 gemäß den Fign. 3a bis 3c ist es bei der Ausführungsform gemäß 3d nicht erforderlich, die Stiftelemente 11 in einem separaten Montageschritt einzeln einzuführen. Wie beschrieben werden diese vielmehr mit dem Profilelement 4 gemeinsam in das Gehäuse 3 des Klemmverbinders eingeführt, wodurch der Montageaufwand vereinfacht ist.

### Bezugszeichenliste

- 1: Klemmverbinder
- 2: Basiskörper
- 3: Gehäuse
- 4: Profilelement
- 5: Ankerelement
- 6: Profillängsrichtung
- 7: Profilquerrichtung
- 8: Exzenter
- 9: Schraube
- 10: Ausnehmung
- 11: Stiftelement
- 12: Bohrung
- 13: Vorsprung
- 14: Betätigungsbahn
- 15: Exzenterkopf
- 16: Exzenterabschnitt
- 17: Anlagefläche
- 18: Feder
- 19: Vorsprung
- 20: Öffnung
- 21: Aufnahmebereich
- 22: Aufnahmebereich

## Patentansprüche

1. Klemmverbinder zum lösbaren Verbinden von zwei Profilstücken, von denen das eine eine hinterschnittene Längsnut und das andere ein kastenförmiges Hohlprofil aufweist, mit einem in das Hohlprofil einsetzbaren Basiskörper (2) und einen am Basiskörper (2) angeordneten, in der Längsnut verklemmbaren Ankerelement (5), wobei der Basiskörper (2) aus einem Gehäuse (3) und einem im wesentlichen länglichen sowohl in Hohlprofillängsrichtung (6) als auch in Hohlprofilqeurrichtung (7) relativ zum Gehäuse (3) bewegbaren Profilelement (4) gebildet ist und wobei das Ankerelement (5) an der der Längsnut zugewandten Stirnfläche des Profilelements (4) angeordnet ist, wobei das Gehäuse (3) ein durch eine Öffnung (20) in einer Wandung des Hohlprofils zugängliches Betätigungselement (8, 9) zur Erzeugung einer Relativbewegung zwischen dem Profilelement (4) und dem Gehäuse (3) in wenigstens einer ersten Richtung aufweist, wobei das Gehäuse zur Erzeugung einer Relativbewegung zwischen Gehäuse und Profilelement in wenigstens einer zweiten Richtung für den Fall, daß eine Relativbewegung in der ersten Richtung erfolgt, sowie zur Begrenzung der Bewegungswege von Gehäuse und Profilelement relativ zueinander in Hohlprofillängsrichtung (6) und Hohlprofilquerrichtung (7) Führungsbahnen bildende Ausnehmungen (10) aufweist, welche wenigstens ein zwischen Profilelement (4) und Gehäuse (3) angeordnetes Führungselement (11) aufnehmen, wobei die Ausnehmungen (10) im wesentlichen dreieckförmig ausgebildet sind, **dadurch gekennzeichnet daß** die Ausnehmungen (10) für eine Lagefixierung des Führungselements (11) wenigstens einen an einer Ausnehmungsseite angeordneten und nach innen gerichteten Vorsprung (13) aufweisen.

2. Klemmverbinder nach Anspruch 1, **dadurch gekennzeichnet, daß** das Betätigungselement (8, 9) eine Schraube (9) mit Kegelspitze ist, welche bei einer Betätigung mit einer schräg zur Längsrichtung verlaufenden Auflauffläche im Profilelement (4) zusammenwirkt.

3. Klemmverbinder nach Anspruch 1, **dadurch gekennzeichnet, daß** das Betätigungselement (8, 9) ein Exzenter (8) ist, der in eine korrespondierende Betätigungsbahn (14) im Profilelement (4) hineinragt.

4. Klemmverbinder nach Anspruch 3, **dadurch gekennzeichnet, daß** der Exzenter (8) aus einem Exzenterkopf (15) und einem außermittig am Exzenterkopf (5) angeordneten Exzenterabschnitt (16) gebildet ist, wobei der Exzenterabschnitt (16) bolzenförmig ausgebildet ist und einen im wesentlichen kreisförmigen Querschnitt mit zumindest einer plan ausgebildeten Anlagefläche (17) aufweist.

5. Klemmverbinder nach einem der Ansprüche 1 bis 4, **dadurch gekennzeichnet, daß** das Führungselement ein Stiftelement (11) ist, das in eine korrespondierende Durchgangsbohrung (12) im Profilelement (4) eingesetzt ist und in der Länge derart bemessen ist, daß es im wesentlichen der Breite des Gehäuses (3) entspricht und jeweils endseitig in die im Gehäuse (3) ausgebildeten Ausnehmungen (10) hineinragt.

6. Klemmverbinder nach einem der Ansprüche 1 bis 4, **dadurch gekennzeichnet, daß** das Führungselement (11) ein am Profilelement (4) angeformter Vorsprung ist.

7. Klemmverbinder nach einem der vorhergehenden Ansprüche, **dadurch gekennzeichnet, daß** in Bezug auf wenigstens eine relative Bewegungsrichtung zwischen Gehäuse (3) und Profilelement (4) ein elastisches Element (18) angeordnet ist.

8. Klemmverbinder nach Anspruch 7, **dadurch gekennzeichnet, daß** die Wirkrichtung des elastischen Elements (18) und die Längswirkrichtung (6) des Profilelements (4) unter einem Winkel von vorzugsweise 45° aufeinanderstehen.

9. Klemmverbinder nach einem der vorhergehenden Ansprüche, **dadurch gekennzeichnet, daß** das Ankerelement (5) eine T-Kopf-Form aufweist, wobei die dem Profilelement (4) zugewandten Stirnfläche des Ankerelements (5) wenigstens einen Vorsprung (9) aufweisen.

10. Klemmverbinder nach Anspruch 9, **dadurch gekennzeichnet, daß** der Vorsprung (19) dornen-, prisma- oder pyramidenförmig ausgebildet ist.

## Claims

1. Clamping connector for detachably connecting two profile pieces, one of which comprises an undercut longitudinal groove and the other a box-shaped hollow profile, with a base body (2), which can be inserted in the hollow profile, and an anchor element (5), which is disposed at the base body (2) and can be clamped in the longitudinal groove, wherein the base body (2) is formed from a housing (3) and a substantially elongate profile element (4) which can move both in the hollow profile longitudinal direction (6) and in the hollow profile transverse direction (7) relative to the housing (3), and wherein the anchor element (5) is disposed at the end face of the profile element (4) which faces the longitudinal groove, wherein the housing (3) comprises an actuating element (8, 9), which is accessible through an opening (20) in a wall of the hollow profile, for producing a relative movement between the profile element (4) and the housing (3) in at least one first direction, wherein the housing comprises recesses (10), which form guideways, for producing a relative movement between the housing and the profile element in at least one second direction in the event of there being a relative movement in the first direction, and for limiting the paths of movement of the housing and the profile element relative to one another in the hollow profile longitudinal direction (6) and the hollow profile transverse direction (7), which recesses accommodate at least one guide element (11) disposed between the profile element (4) and the housing (3), wherein the recesses (10) are substantially triangular,
**characterised in that** the recesses (10) comprise at least one projection (13), which is disposed at one recess side and is directed inwards, for fixing the position of the guide element (11).

2. Clamping connector according to Claim 1, **characterised in that** the actuating element (8, 9) is a screw (9) with a cone point which, upon actuation, co-operates with a run-up face, extending obliquely to the longitudinal direction, in the profile element (4).

3. Clamping connector according to Claim 1, **characterised in that** the actuating element (8, 9) is an eccentric (8) which projects into a corresponding actuating track (14) in the profile element (4).

4. Clamping connector according to Claim 3, **characterised in that** the eccentric (8) is formed from an eccentric head (15) and an eccentric portion (16) which is disposed eccentrically at the eccentric head (15), wherein the eccentric portion (16) is formed in the shape of a bolt and has a substantially circular cross section with at least one plane locating face (17).

5. Clamping connector according to any one of Claims 1 to 4, **characterised in that** the guide element is a pin element (11) which is inserted in a corresponding through-bore (12) in the profile element (4) and is dimensioned in terms of length such that it corresponds substantially to the width of the housing (3) and in each case projects at the end into the recesses (10) formed in the housing (3).

6. Clamping connector according to any one of Claims 1 to 4, **characterised in that** the guide element (11) is a projection which is moulded onto the profile element (4).

7. Clamping connector according to any one of the preceding Claims, **characterised in that** an elastic element (18) is disposed in relation to at least one relative direction of movement between the housing (3) and the profile element (4).

8. Clamping connector according to Claim 7, **characterised in that** the direction of action of the elastic element (18) and the longitudinal direction of action (6) of the profile element (4) are at an angle of preferably 45° to one another.

9. Clamping connector according to any one of the preceding Claims, **characterised in that** the anchor element (5) has a T-head shape, wherein the end face of the anchor element (5) which faces the profile element (4) comprises at least one projection (9).

10. Clamping connector according to Claim 9, **characterised in that** the projection (19) is mandrel-shaped, prismatic or pyramidal.

## Revendications

1. Dispositif de jonction par serrage pour la jonction amovible de deux éléments de profilés dont l'un comporte une rainure longitudinale contre-dépouillée et l'autre un profilé creux en forme de caisse, avec un élément de base (2) insérable dans le profilé creux et un élément d'ancrage (5) agencé dans l'élément de base (2) qui peut être bloqué dans la rainure longitudinale, dans lequel l'élément de base (2) est formé par un boîtier (3) et un élément de profilé (4) sensiblement oblong, déplaçable aussi bien dans la direction longitudinale du profilé creux (6) que dans la direction transversale du profilé creux (7) et dans lequel l'élément d'ancrage (5) est agencé sur la surface extérieure de l'élément de profilé (4) tournée vers la rainure longitudinale, dans lequel le boîtier (3) comporte un élément de manoeuvre(8, 9) accessible à travers une ouverture (20) d'une paroi du profilé creux pour générer un mouvement relatif entre l'élément de profilé (4) et le. boîtier (3) dans au moins une première direction, dans lequel le boîtier, pour générer un mouvement relatif entre le boîtier et l'élément de profilé dans au moins une seconde direction pour le cas où un mouvement relatif se produit dans la première direction, ainsi que pour limiter les trajectoires du mouvement entre le boîtier et l'élément de profilé l'un par rapport à l'autre dans la direction longitudinale du profilé creux (6) et dans la direction transversale du profilé creux (7), comporte des évidements (10) formant des glissières de guidage dans lesquels est logé au moins un élément de guidage (11) agencé entre l'élément de profilé (4) et le boîtier (3), dans lequel les évidements (10) ont sensiblement une forme triangulaire, **caractérisé en ce que** les évidements (10) comportent, pour la fixation en position de l'élément de guidage (11), au moins une partie en saillie (13) agencée sur un côté d'évidement et dirigée vers l'intérieur.

2. Dispositif de jonction par serrage selon la revendication 1, **caractérisé en ce que** l'élément de manoeuvre (8, 9) est une vis (9) avec une pointe conique qui, lors d'une manoeuvre, coopère avec une surface de contact dans l'élément de profilé (4) s'étendant en biais par rapport à la direction longitudinale.

3. Dispositif de jonction par serrage selon la revendication 1, **caractérisé en ce que** l'élément de manoeuvre (8, 9) est une excentrique (8) qui fait saillie dans une glissière de manoeuvre (14) correspondante dans l'élément de profilé (4).

4. Dispositif de jonction par serrage selon la revendication 3, **caractérisé en ce que** l'excentrique (8) est formée par une tête d'excentrique (15) et par un tronçon d'excentrique (16) agencé de manière excentrique sur la tête d'excentrique (15), dans lequel le tronçon d'excentrique (16) a une forme de boulon et présente une section transversale sensiblement circulaire avec au moins une surface d'appui (17) de configuration plane.

5. Dispositif de jonction par serrage selon l'une quelconque des revendications 1 à 4, **caractérisé en ce que** l'élément de guidage est un élément de goupille (11) qui est inséré dans un alésage passant (12) correspondant dans l'élément de profilé (4) et dont la longueur est calculée de manière à ce qu'il corresponde sensiblement à la largeur du boîtier (3) et à ce qu'il fasse saillie à chaque extrémité dans les évidements (10) formés dans le boîtier (3).

6. Dispositif de jonction par serrage selon l'une quelconque des revendications 1 à 4, **caractérisé en ce que** l'élément de guidage est une partie en saillie formée dans l'élément de profilé (4).

7. Dispositif de jonction par serrage selon l'une quelconque des revendications précédentes, **caractérisé en ce qu'**un élément élastique (18) est agencé entre le boîtier (3) et l'élément de profilé (4) par rapport à au moins une direction de mouvement relatif.

8. Dispositif de jonction par serrage selon la revendication 7, **caractérisé en ce que** la direction effective de l'élément élastique (18) et la direction longitudinale effective (6) de l'élément de profilé (4) sont placées l'une sur l'autre selon un angle de 45°, de préférence,

9. Dispositif de jonction par serrage selon l'une quelconque des revendications précédentes, **caractérisé en ce que** l'élément d'ancrage (5) présente une forme de tête en T, les surfaces extérieures de l'élément d'ancrage (5) tournées vers l'élément de profilé (4) comportant au moins une partie en saillie (19).

10. Dispositif de jonction par serrage selon la revendication 9, **caractérisé en ce que** la partie en saillie (19) a une forme de dôme, de prisme ou de pyramide.
